## Europäisches Patentamt
## European Patent Office
## Office européen des brevets

(11) Veröffentlichungsnummer: **0 380 709**
**A1**

(12) # EUROPÄISCHE PATENTANMELDUNG

(21) Anmeldenummer: 88120293.1

(51) Int. Cl.⁵: **B01D 29/48**

(22) Anmeldetag: 05.12.88

(43) Veröffentlichungstag der Anmeldung:
08.08.90 Patentblatt 90/32

(84) Benannte Vertragsstaaten:
**AT BE CH DE ES FR GB GR IT LI LU NL SE**

(71) Anmelder: **A4GM Gépipari Kutato-Fejlesztö Leányvállalat
Budafoki ut 70
H-1117 Budapest(HU)**

(72) Erfinder: **Szabo, Zsolt
Juhász Gy. u. 8.
H-1039 Budapest(HU)**
Erfinder: **Vajna, Zoltán Dr.
Tardoskedd u. 9
H-1113 Budapest(HU)**
Erfinder: **Györy, Jozsef Dr.
Tüske köz 4
H-1026 Budapest(HU)**
Erfinder: **Nyitrai, Ferenc Dr.
Nándorfehérvári ut 7/b
H-1119 Budapest(HU)**

(74) Vertreter: **Patentanwälte Viering & Jentschura
Steinsdorfstrasse 6
D-8000 München 22(DE)**

(54) **Filterkerze.**

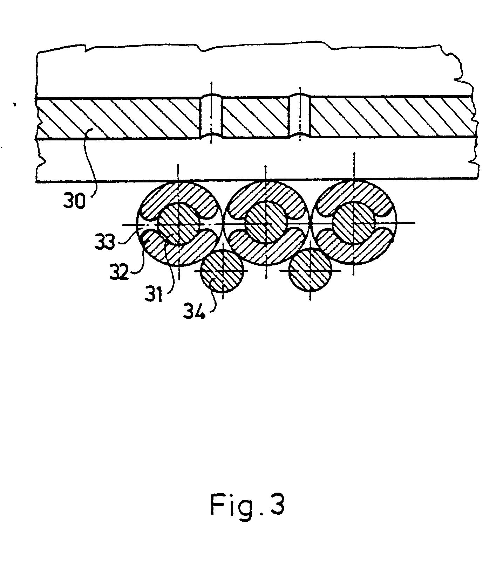

(57) Filterkerze, die einen die eigentliche Filterschicht tragenden, mit Durchbrüchen, Öffnungen und Perforation versehenen rohrförmigen Stützkörper (30) und eine auf den Stützkörper aufgewickelte und die Filterschicht bildende Drahtschicht aufweist. Die wesentliche Charakteristik der Erfindung besteht darin, daß die Drahtschicht aus helikoidal oder auf sonstige vorbestimmte Weise deformiertem oder bemusterten Draht gebildet ist. Es wird als vorteilhaft betrachtet, wenn der auf den Stützkörper (30) aufgewickelte deformierte oder bemusterte Draht aus der Kombination eines Leitdrahtes (31) und eines auf den Leitdraht aufgewickelten weiteren Drahts (32) zusammengesetzt ist (Fig. 3).

Fig.3

## Filterkerze

Die Erfindung betrifft eine Filterkerze, die einen die eigentliche Filterschicht tragenden, mit Durchbrüchen, Öffnungen, Perforation versehenen rohrartigen Stützkörper und eine auf den Stützkörper aufgewickelte, die Filterschicht bildende Drahtschicht aufweist.

Wie es wohlbekannt ist, besteht einer der Typen der Filterkerzen aus einem zylindrischen, mit Öffnungen, Durchbrüchen, Perforation versehenen rohrartigen Stützkörper und aus der auf den Stützkörper gelegten eigentlichen Filterschicht, wobei auf den zylindrischen Stützkörper, mit einem dem gewünschten Maß der Filterung entsprechenden Spalt Draht aufgewickelt wird.

Demnach bestimmen der gegenseitige Abstand der nebeneinander aufgewickelten Drähte, sowie die sich aus der Drahtproduktion ergebenden Unebenheiten der Fläche die Breite der Filterspalte der Filterkerze. Daraus ergibt sich, daß je kleiner die Filterspalte sein sollen bzw. je näher aneinander die Drahtwindungen verlegt werden, desto größer das prozentuale Verhältnis der sich aus den Unebenheiten der Drahtfläche ergebenden Abweichungen gegenüber den nominalen Filterspalten wird. Auf diese Weise kann daher unter Anwendung der geschilderten Methode die Dimensionierung der Filterspalte der Filterkerze bzw. die Bestimmung des nützlichen Filterquerschnitts nicht beherrscht werden.

Der Erfindung wurde das Ziel gesetzt die Nachteile der in der Einleitung geschilderten Filterkerze zu vermeiden und eine Filterkerze zu schaffen, bei der sowohl die Größe der Filterspalte als auch der nützliche Filterquerschnitt mit höchster Genauigkeit bestimmt werden können.

Die Erfindung beruht auf der Erkenntnis, daß das gesetzte Ziel erreicht werden kann, wenn der als Filterschicht zur Anwendung kommende Draht bzw. dessen Oberfläche auf vorbestimmte Weise deformiert oder bemustert wird, und der derweise deformierte oder mit Muster ausgestaltete Draht so auf den Stützkörper aufgewickelt wird, daß die Windungen eng nebeneinander liegen. In diesem Fall wird die Größe der Filterspalte durch das Profil bzw. das Maß der Deformation bestimmt, während der Filterquerschnitt durch deren Frequenz und Maß bestimmt wird. Auf diese Weise können die Filterparameter der Filterkerze wunschgemäß gut beherrscht werden.

Demnach bezieht sich die Erfindung auf eine Filterkerze, die einen die eigentliche Filterschicht tragenden, mit Durchbrüchen, Öffnungen oder Perforation versehenen rohrartigen Stützkörper und eine auf den Stützkörper aufgewickelte, die Filterschicht bildende Drahtschicht aufweist.

Das Wesen der Erfindung besteht insbesondere darin, daß die Drahtschicht aus auf vorbestimmte Weise deformierten oder bemusterten Drähten besteht. Im Sinne der einen recht vorteilhaften und gut beherrschbaren Methode der Gestaltung des Dessins bzw. der Deformation wird der Draht dem Aufwickeln vorangehend um seine eigene Achse gedreht, d. h. helikoidal deformiert.

Auch ist eine Ausführungsform vorteilhaft, bei der der entsprechend deformierte oder bemusterte Draht durch die Kombination eines Leitdrahts und eines auf den Leitdraht gewickelten Drahts - im allgemeinen mit einem geringeren Durchmesser - gebildet wird.

Den verschiedenen Bestimmungen entsprechend kann der anzuwendende Draht die verschiedensten Querschnitte aufweisen, von dem Kreisquerschnitt beginnend bis zu ovalem, dreieckigem, viereckigem, polygonalem Querschnitt usw. Der Draht wird aus einem dem Anwendungsgebiet meist entsprechenden Werkstoff, so Metall oder Kunststoff hergestellt.

Auf den Querschnitt zuruückkehrend nimmt, z. B. bei einem polygonalen Querschnitt die Anzahl der auf die Einheitslänge entfallenden Filtrierspalte bei gleichem Verdrehungsgrad mit der Zunahme der Seitenschenkel des Polygons zu.

Die Filtereinheit der aus helikoidal deformiertem Draht gefertigten Filterschicht wird durch die maximale Größe der auf dem Mantel - der den Treffpunkten der Drähte entspricht - zustandegebrachten Filterspalte bestimmt, während die Durchlaßfähigkeit durch den gesamten freien Querschnitt der Filterspalte bestimmt wird. Die Bögen zwischen den über dem Treffmantel angeordneten schrägen, quasi einen Raupenrücken ähnelnden helikoidalen Gewindekanten bilden quasi eine querverlaufende Vorfilterschicht, auf denen die größeren Körner hängenbleiben. Im Hinblick darauf, daß die Vorfilterfläche eine größere Filterfläche darstellt, als die tatsächliche Durchlaßfläche der Filterkerze, verlängert sich die Lebensdauer der Filterkerze in einem bedeutenden Maß.

Bei einer Basislösung der Erfindung ist der deformierte oder bemusterte Draht unmittelbar auf den Stützkörper aufgewickelt.

Im Sinne der Erfindung besteht aber auch die Möglichkeit, den deformierten oder bemusterten Draht auf die bereits aufgewickelte Drahtschicht einer bereits vorhanden, auf die bekannte Weise hergestellten Filterkerze aufzuwickeln, wodurch die seitens der Erfindung angebotenen Vorteile auch dieser Filterkerze zuteil werden.

Selbstverständlich kann im Sinne der Erfindung der deformierte oder bemusterte Draht nicht nur auf den Stützkörper selbst, sondern auf eine auf den Körper aufgetragene jedwelche durchlässige Schicht aufgewickelt werden.

In gewissen Fällen kann es vorteilhaft sein, wenn der deformierte oder bemusterte Draht in die auf dem Stützkörper ausgebildeten Gewindegänge eingewickelt wird.

Bei einer vorteilhaften Ausführungsform der erfindungsgemäßen Lösung ist auf die aus helikoidal oder auf jedwelche bestimmte Weise deformiertem oder bemusterten Draht bestehende Wicklung bzw. zwischen deren Windungen ein weiterer Draht auf- oder eingewickelt. In diesem Fall fällt die Breite der Filterspalte auf die Hälfte ab, die Filtereinheit erreicht den doppelten Wert, ohne daß die freie Filterfläche kleiner wäre. Sollte nun dieser auf die erste Drahtschicht oder in deren Gewindegänge gewickelte Draht im Sinne der Erfindung ebenfalls helikoidal oder auf sonstige Weise deformiert sein, oder ist darauf ein Dessin ausgestaltet, nimmt die Länge der Filterspalten zu.

Der Vorteil der erfindungsgemäßen Filterkerze zeigt sich darin, daß eine geometrisch regelmäßige, über im voraus berechnete Charakteristiken verfügende Filterfläche mit beliebiger Filterfeinheit hergestellt bzw. ausgestaltet werden kann.

Bei einer helikoidalen Drahtdeformation nimmt mit Vergrößerung des Verdrehungsgrades die Anzahl der auf die Einheitslänge der Windungslücke entfallenden Filterspalte zu, gleichzeitig wird das Verhältnis Länge/Breite des Filterspalts kleiner sein. Wenn nun in den Windungslücken der aus Draht gewickelten Schicht ein weiterer Draht gewickelt wird, entsteht eine Vorfilterschicht, deren Filterfeinheit der größte Durchmesser des Querschnitts des zur Basisschicht verwendeten Drahts und der Durchmesser des in der zweiten Schicht aufgewickelten Drahtes bestimmen. Selbstverständlich muß der Durchmesser des in der zweiten Schicht aufgewickelten Drahts so gewählt werden, daß die freie Filterfläche der Vorfilterschicht zu der tatsächlichen Filterfläche gleich ist oder diese überschreitet, damit eine in dem Filter entstehende Drosselung vermieden ist. Durch das Einwickeln eines weiteren Drahtes in die Windungsgänge der Basisschicht können vielschichtige durchlassende Systeme mit beliebiger Fläche und regelbarer Porosität ausgestaltet werden, die auch bei volumentrischer Filtrierung und auf solchen Gebieten, wo nicht Filtrierung primär ist (Reaktoren, Wärmeaustauscher usw.) verwendet werden können.

Bei der erfindungsgemäßen Filterkerze kann die durch Drahtaufwicklung ausgestaltete Filterfläche mit einer sonstigen austauschbaren Filterschicht kombiniert werden, so z.B. mit Schichten aus Papier, Textil, Kunststoff, Glasgewebe usw.

Die Erfindung wird anhand eines Ausführungsbeispiels, mit Hilfe der Zeichnung näher erläutert.

Es zeigen:

Fig. 1 den Querschnitt einiger möglichen Ausführungsformen des helikoidal deformierten Drahts,

Fig. 2 die Ansicht eines helikoidal deformierten, d.h. durch Verdrehen verformten Drahts,

Fig. 3 den Schnitt eines Teils einer aus der Kombination eines Leitdrahts und eines auf den Leitdraht aufgewickelten Drahts bestehenden Filterkerze, wobei in die Wicklungsgänge der die Filterschicht bildenden Drahtkombination ein weiterer Draht eingewickelt ist.

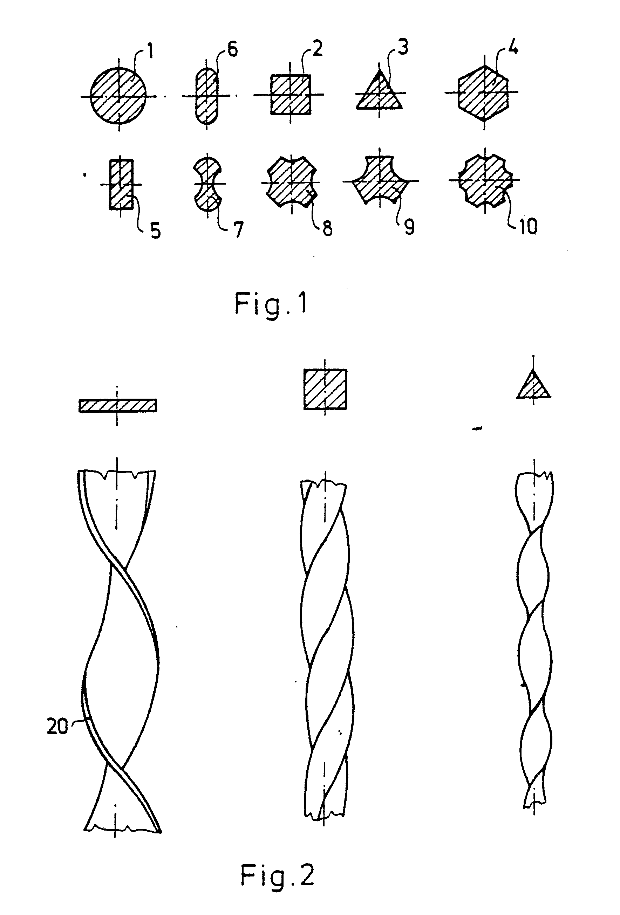

Figur 1 veranschaulicht einige Beispiele für Drähte mit unterschiedlichen Querschnitten, so Kreisquerschnitt 1, Viereckquerschnitt 2, Dreieckquerschnitt 3, hexagonaler Querschnitt 4, verflachter Viereckquerschnitt usw. Der Draht kann auch mit den mit Referenznummern 6, 7, 8, 9, 10 bezeichneten Querschnitten ausgestaltet werden, selbstverständlich sind auch andere Querschnitte möglich.

Der in Figur 2 dargestellte Draht wurde duch Verdrehung bzw. Verdrillen deformiert und zwar in der Weise, daß auf der Außenfläche des Drahtes die Deformation in Form des Gewindes 20 erscheint. Aus der Figur ist es wohl ersichtlich, daß durch die Einstellung des Torsionsgrades und durch die entsprechende Wahl der Größe und des Querschnitts des aufzuwickelnden Drahtes Filtereinheit und Filterquerschnitt bestimmt werden können.

Bei der Ausführungsform nach Figur 3 ist auf den Stützkörper 30 der Draht 32 auf dem Leitdraht 31 aufgewickelt, wodurch der deformierte oder bemusterte Draht entsteht. Bei diesem Ausführungsbeispiel ist in die Gewindegänge der die Grundschicht ergebenden, aus dem Draht 33 bestehenden Wicklung ein weiterer Draht 34 mit kleinerem Durchmesser eingewickelt.

Wir haben die Erfindung mit manchen hervorgehobenen Beispielen geschildert. Nach dem Erfindungsprinzip können die verschiedensten Ausführungsformen für die verschiedensten Aufgaben ausgestaltet werden. Selbstverständlich besteht keine Beschränkung hinsichtlich des Grundstoffes des Drahtmaterials. Der allgemeine Aufbau der Filterkerze wurde nicht beschrieben, da dieser mit dem in der Einleitung spezifizierten Typ übereinstimmt.

## Ansprüche

1. Filterkerze, die einen die tatsächliche Filterschicht tragenden, mit Durchbrücken, Öffnungen oder Perforation versehenen rohrförmigen Stützkörper und eine, auf den Stützkörper (30) aufgewickelte und die Filterschicht bildende Drahtschicht aufweist, dadurch gekennzeichnet, daß die Drahtschicht aus helikoidal oder auf sonstige vorbestimmte Weise deformiertem oder bemusterten Draht besteht.

2. Filterkerze nach Anspruch 1, dadurch gekennzeichnet, daß der auf den Stützkörper (30) aufgewickelte deformierte oder bemusterte Draht aus einem Leitdraht (31) und einen auf den Leitdraht (31) gewickelten Draht (33) kombiniert ausgestaltet ist.

3. Filterkerze nach Ansprudh 1 oder 2, dadurch gekennzeichnet, daß der deformierte oder bemusterte Draht unmittelbar auf den Stützkörper (30) aufgewickelt ist.

4. Filterkerze nach Anspruch 1 oder 2, dadurch gekennzeichnet, daß der deformierte oder bemusterte Draht auf die auf den Stützkörper (30) bereits aufgewickelte Drahtschicht oder auf die auf den Stützkörper aufgetragene durchlässige Schicht aufgewickelt ist.

5. Filterkerze nach Anspruch 3, dadurch gekennzeichnet, daß der deformierte oder bemusterte Draht in Gewindegänge des Stützkörpers eingewik-kelt ist.

6. Filterkerze nach einem der Ansprüche 1 bis 5, dadurch gekennzeichnet, daß auf die Wicklung, die aus helikoidal oder auf sonstige vorbestimmte Weise deformiertem oder bemustertem Draht besteht, bzw. in deren Gewindegänge ein weiterer Draht (34) eingewickelt ist.

EP 0 380 709 A1

1    6    2    3    4

5    7    8    9    10

Fig.1

20

Fig.2

Fig. 3

Europäisches Patentamt

EUROPÄISCHER RECHERCHENBERICHT

Nummer der Anmeldung

EP 88 12 0293

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A- 922 154 (J. BOCCHI) <br> * Seite 1, Zeilen 45-58; Seite 2, Zeilen 1-3,83-98 * <br> --- | 1 | B 01 D 29/48 |
| X | FR-A-1 472 045 (M. PICARDI) <br> * Seite 1, linke Spalte, Absätze 1,6 * <br> --- | 1,2,3,6 | |
| X | FR-A-1 551 210 (M. PICARDI) <br> * Seite 1 * <br> --- | 1,2,3,6 | |
| X | DE-A-2 241 063 (ENZINGER-UNION-WERKE) <br> * Seite 2, Absatz 2 * <br> --- | 1,3,6 | |
| A | FR-A-1 314 425 (SCHUMACHER'SCHE FABRIK) <br> * Seite 1, rechte Spalte, Absätze 2,3; Seite 2, rechte Spalte, Absatz 4 * <br> --- | 1,2,3 | |
| A | FR-A-1 360 037 (THE LINDSAY WIRE WEAVING CO.) <br> * Seite 3, rechte Spalte, Absätze 2,3; Seite 4, linke Spalte, Absätze 1,2; rechte Spalte, Absätze 1,2,3 * <br> --- | 1,3 | **RECHERCHIERTE SACHGEBIETE (Int. Cl.5)** <br><br> B 01 D |
| X | GB-A- 185 638 (G.C. HURRELL) <br> * Seite 1, Zeilen 23-40 * <br> ----- | 1,3,6 | |

Der vorliegende Recherchenbericht wurde für alle Patentansprüche erstellt

| Recherchenort | Abschlußdatum der Recherche | Prüfer |
|---|---|---|
| DEN HAAG | 22-02-1989 | KERRES P.M.G. |